# EUROPÄISCHE PATENTSCHRIFT

(11) **EP 2 862 190 B1**
(45) Veröffentlichungstag und Bekanntmachung des Hinweises auf die Patenterteilung: **13.06.2018**
(21) Anmeldenummer: 13718175.6
(22) Anmeldetag: 19.04.2013
(51) Int. Cl.: H01H 9/00, H02P 13/06

(54) **LASTSTUFENSCHALTER**
ON-LOAD TAP CHANGER
CHANGEUR DE PRISES EN CHARGE

(30) Priorität: 14.06.2012 DE 102012105152
(43) Veröffentlichungstag der Anmeldung: 22.04.2015
(73) Patentinhaber: Maschinenfabrik Reinhausen GmbH, 93059 Regensburg (DE)
(72) Erfinder: KAMMERL, Herbert, 93128 Regenstauf (DE); BIERINGER, Alfred, 94333 Geiselhöring (DE)
(86) Internationale Anmeldenummer: PCT/EP2013/058189
(87) Internationale Veröffentlichungsnummer: WO 2013/185961

(56) Entgegenhaltungen:
- WO-A1-2004/088693
- WO-A1-2011/035825
- WO-A1-2012/022397
- DE-C- 639 885
- DE-C1- 4 237 165
- US-A- 1 985 927

## Beschreibung

Die vorliegende Erfindung betrifft einen Laststufenschalter zur unterbrechungslosen Umschaltung zwischen verschiedenen Wicklungsanzapfungen eines Stufentransformators gemäß dem Oberbegriff des ersten Patentanspruches.

Laststufenschalter sind seit vielen Jahren zur unterbrechungslosen Umschaltung zwischen verschiedenen Wicklungsanzapfungen von Stufentransformatoren in großen Zahlen weltweit im Einsatz. Sogenannte Reaktorschalter, die besonders in Nord-Amerika verbreitet sind, besitzen eine Umschaltreaktanz, die eine langsame, kontinuierliche Umschaltung ermöglicht. Laststufenschalter nach dem Widerstandsschnellschalt-Prinzip bestehen üblicherweise aus einem Wähler zur leistungslosen Anwahl der jeweiligen Wicklungsanzapfung des Stufentransformators, auf die umgeschaltet werden soll, und einem Lastumschalter zur eigentlichen Umschaltung von der bisherigen auf die neue, vorgewählte Wicklungsanzapfung. Der Lastumschalter weist dazu üblicherweise Schaltkontakte und Widerstandskontakte auf. Die Schaltkontakte dienen dabei zur direkten Verbindung der jeweiligen Wicklungsanzapfung mit der Lastableitung, die Widerstandskontakte zur kurzzeitigen Beschaltung, d. h. Überbrückung mittels eines oder mehrerer Überschaltwiderstände. Die Entwicklungen der letzten Jahre führten jedoch weg von Lastumschaltern mit mechanischen Schaltkontakten im Isolieröl. Stattdessen werden vermehrt Vakuumschaltzellen als Schaltelemente eingesetzt.

Ein derartiger Laststufenschalter mit Vakuumschaltröhren ist beispielsweise aus der DE 10 2009 043 171 A1 offenbart. Hier trägt ein Lastumschalter eine von einem Kraftspeicher antreibbare Antriebswelle mit mindestens einer Kurvenscheibe. Die Kurvenscheibe weist mehrere Steuerkurven auf, wobei zwei an der Kurvenscheibe stirnseitig angeordnete Steuerkurven eine von einer Kreisform abweichende Kontur nach Art von Nocken aufweisen, an der kontaktschlüssig jeweils eine über einen Kipphebel mit einer Vakuumschaltröhre verbundene Rolle geführt wird, die die profilierte Kontur der jeweiligen Steuerkurve abgreift.

Bei einer besonderen Gattung von Laststufenschaltern, den so genannten Lastwählern, sind die beschriebenen Mittel zur Anwahl einer neuen Wicklungsanzapfung und die Mittel zur eigentlichen Lastumschaltung baulich vereinigt und werden gemeinsam betätigt. Üblicherweise sind Stufenschalter nach dem Prinzip der Widerstandsschnellschaltung zur unterbrechungslosen Umschaltung von einer Anzapfung eines Stufentransformators zu einer anderen so aufgebaut, dass die jeweils mit den Ausleitungen der Stufenwicklungen elektrisch in Verbindung stehenden festen Stufenkontakte in einer oder mehreren horizontalen Ebene bzw. Ebenen kreisförmig an einem Isolierstoffgerüst oder - zylinder angeordnet sind und durch von konzentrischen Antriebswellen betätigte drehbare Kontaktbrücken beschaltbar sind. Bei Lastwählern, bei denen die Stufenwahl und die eigentliche Lastumschaltung kombiniert sind, erfolgt die Betätigung der Kontaktbrücken dabei sprungartig nach Auslösung eines von der Antriebswelle des Schalters aufgezogenen Energiespeichers, meist Federkraftspeichers.

In der DE 42 37 165 C1 ist, abweichend von diesen üblichen Konstruktionen, ein Stufenschalter mit linearer Kontaktbetätigung beschrieben, wobei die festen Stufenkontakte längs einer Bahn sich in das Innere des Schalters erstrecken und von einem verschiebbaren Schaltmechanismus beschaltbar sind, der wiederum von der Antriebswelle angetrieben wird. Der vertikal verschiebbare Schaltmechanismus besteht dabei aus einem kontinuierlich von der Antriebswelle antreibbaren Aufzugsschlitten, der den neuen festen Stufenkontakt vorwählt, und einem durch den Aufzugsschlitten mittels eines Energiespeichers aufziehbarem Abtriebsteil, das nach Auslösung sprungartig dem Aufzugsschlitten nachläuft und dabei die eigentliche Lastumschaltung von der bisherigen Anzapfung der Stufenwicklung auf die vorgewählte neue Anzapfung vollzieht. Die dazu erforderlichen Schaltelemente sind Bestandteil des Abtriebsteiles.

Aus der DE 198 47 745 C1 ist ein weiterer, auf die Anmelderin zurückgehender, Laststufenschalter mit linear angeordneten Wählerkontakten bekannt geworden. Oberhalb der Wählerkontakte, also örtlich getrennt, befinden sich die den jeweiligen Wählerkontakten einer jeden Phase zugeordneten feststehenden Vakuumschaltröhren zur eigentlichen, sprungartigen Lastumschaltung. Zur Betätigung dieses Laststufenschalters ist ein Federenergiespeicher notwendig, der während seiner Aufzugsbewegung die Wählerkontakte betätigt, als auch die Vakuumschaltelemente durch seine sprungartige Abtriebsbewegung antreibt.

US 1 985 927 A beschreibt weiterhin einen Stufenschalter für Stufentransformatoren, der vertikal verschiebbare Kontaktplatten aufweist, welche die zu beschaltenden Wicklungsanzapfungen des Stufentransformators vorwählen. Die Kontaktplatten werden mittels eines Zylinders über eine Welle angetrieben. Über diese Welle erfolgt ebenso die Betätigung der Kontakte des Lastumschalters. Dabei treibt die Welle eine Kurbel an, die über Zugfedern mit den Kontakten des Lastumschalters verbunden ist. Beim Drehen der Kurbel werden die Zugfedern gespannt. Ab einer bestimmten Position ist die Zugspannung so groß, dass die Umschaltung der Schalter des Lastumschalters schlagartig und schnell erfolgt.

Unabhängig vom konstruktiven Aufbau des Laststufenschalters, also mit rotierendem oder linear bewegbarem Kontaktsystem, bedarf es bei aus dem Stand der Technik bekannten Laststufenschaltern eines Federenergiespeichers zum sprungartigen Umschalten mittels des Kontaktsystems. Aus dem Stand der Technik bekannte Kraftspeicher werden zu Beginn jeder Betätigung des Laststufenschalters von einer Antriebswelle aufgezogen, d. h. gespannt. Die bekannten Kraftspeicher bestehen im Wesentlichen aus einem Aufzugsschlitten und einem Sprungschlitten, zwischen denen Kraftspeicherfedern als Energiespeicher angeordnet sind. Derartige Kraftspeicher sind beispielsweise der DE 198 55 860 C1 sowie der DE 28 06 282 B1 entnehmbar.

Es wird eine anfängliche, langsame Drehbewegung der Antriebswelle genutzt, um einen Aufzugsschlitten translatorisch aufzuziehen, um nachfolgend die wiederum translatorische Bewegung des Sprungschlittens, des Abtriebsteils also, in eine rotatorische Hauptbewegung der Abtriebswelle und in eine damit verbundene eigentliche Kontaktbetätigung zu überführen. Diese aufwändige Wandlung einer Drehbewegung in eine translatorische Bewegung und wieder zurück in eine Drehbewegung erfordert einen hohen Platzbedarf der Kraftspeicherkonstruktion innerhalb des Laststufenschalters und zudem eine Vielzahl komplexer einzelner Baugruppen.

WO 2004 088 693 A1 beschreibt einen Stufenschalter, der als Antrieb einen Torque-Motor umfasst, der sowohl den Lastumschalter als auch den Feinwähler direkt betätigt.

Aufgabe der vorliegenden Erfindung ist es daher, einen Laststufenschalter anzugeben, der auf die aufwändige Konstruktion eines Kraftspeichers verzichtet und damit einen deutlich vereinfachten konstruktiven Aufbau bei gleichzeitig erhöhter Betriebssicherheit bietet.

Diese Aufgabe wird durch einen Laststufenschalter zur unterbrechungslosen Umschaltung zwischen verschiedenen Wicklungsanzapfungen eines Stufentransformators mit den Merkmalen des ersten Patentanspruches gelöst. Die Unteransprüche betreffen dabei besonders vorteilhafte Weiterbildungen der Erfindung.

Die allgemeine erfinderische Idee besteht darin, sowohl die Wählerkontakteinheit, als auch die Schaltmittel zur unterbrechungslosen Lastumschaltung mittels eines gemeinsamen Motorantriebes durch eine Gewindespindelanordnung ohne Zwischenschaltung eines Energiespeichers zu betätigen. Nach einem weiteren Merkmal der Erfindung betätigt die direkt vom Motorantrieb angetriebene Gewindespindel mittels einer auf ihr laufenden Spindelmutter direkt die Wählerkontakte sowie vorteilhafter Weise über ein zwischengeschaltetes Getriebe eine Nockenanordnung, die ihrerseits auf die Schaltmittel des Lastumschalters wirkt und diese zur unterbrechungslosen Umschaltung zwischen den beiden Wählerkontakten in einer gerätespezifischen Schaltsequenz betätigt. Besonders vorteilhaft sind Vakuumschaltröhren als derartige Schaltmittel verwendet.

Nach einer bevorzugten Ausführungsform der Erfindung werden die beweglichen Wählerkontakte jeweils in einem Kontaktträger aufgenommen und wirken mit an einer Trägerplatte angeordneten festen Wählerkontakten zusammen, derart, dass die einzelnen festen Wählerkontakte durch eine Längsverschiebung der beweglichen Wählerkontakte als Bestandteil einer gemeinsamen Wählerkontakteinheit, die mit der Spindelmutter mechanisch verbunden ist, in Längsrichtung der Gewindespindel beschaltbar sind. Durch die Hin-und/oder Herbewegung der Wählerkontakteinheit werden die einzelnen festen Wählerkontakte beschaltet und damit der Regelbereich des Laststufenschalters durchlaufen.

Nachfolgend soll die Erfindung beispielhaft noch näher erläutert werden.
Es zeigt:

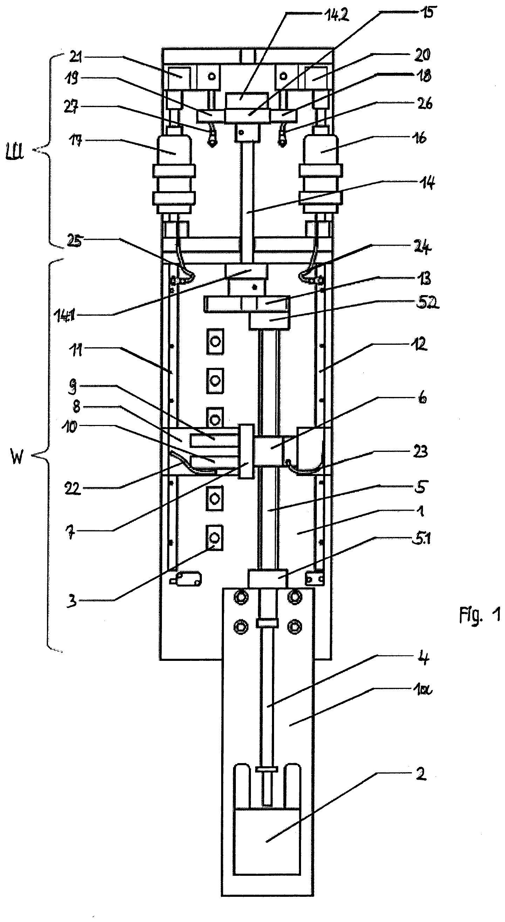

- Fig. 1: einen erfindungsgemäßen Laststufenschalter in schematischer Darstellung von oben.

Grundlegendes tragendes Element für den gesamten Laststufenschalter ist eine Tragplatte 1 aus Isoliermaterial. Direkt auf dieser Tragplatte 1 oder, wie hier gezeigt, einer separaten weiteren Tragplatte 1a, ist ein elektrischer Antriebsmotor 2 befestigt, beispielsweise ein Drehstrom-Asynchronmotor, oder auch ein Torque-Motor oder auch ein Schrittantrieb.
Auf der Tragplatte 1 sind entlang einer linearen Bahn, die in der Figur durch eine Strich-Punkt-Linie angedeutet ist, feste Wählerkontakte 3 in jeweils gleichem Abstand voneinander angeordnet. Jeder dieser elektrisch leitenden Wählerkontakte 3 steht mit einer Wicklungsanzapfung der Regelwicklung des Stufentransformators, der durch den Laststufenschalter beschaltet werden soll, elektrisch in Verbindung.
Der bereits erläuterte Antriebsmotor 2 treibt eine Isolierwelle 4 an, die ihrerseits mit einer Gewindespindel 5 gleichachsig verbunden ist. Es ist im Rahmen der Erfindung auch möglich, dass der Antriebsmotor 2 direkt die in aller Regel metallische Gewindespindel 5 antreibt, jedoch ist aus Gründen der Spannungsfestigkeit die eingefügte beschriebene Isolierwelle 4 in vielen Fällen sinnvoll.
Die Gewindespindel 5 verläuft parallel zur Bahn der festen Wählerkontakte 3. Sie ist an zwei Lagerböcken 5.1 und 5.2 drehbar gelagert und in ihrer Position fixiert.
Auf der Gewindespindel 5 läuft eine Spindelmutter 6, die ihrerseits eine Wählerkontakteinheit 7 trägt, die gemeinsam mit der Spindelmutter 6 in Längsrichtung, d.h. Richtung der Strich-Punkt-Linie, in beiden Richtungen bewegt wird, wenn sich die Gewindespindel 5 dreht.
Auf der Wählerkontakteinheit 7 ist ein Kontaktträger 8 aus Isoliermaterial fest angeordnet, der seinerseits zwei bewegliche Wählerkontakte 9 und 10 trägt. Der Begriff "beweglich" bedeutet, dass die beiden Wählerkontakte 9 und 10 fest und in ihrem Abstand zueinander fixiert auf dem Kontaktträger 8 befestigt sind und gemeinsam mit diesem in Längsrichtung bewegt werden, wenn sich die Gewindespindel 5 dreht.
Die beiden beweglichen Wählerkontakte 9 und 10 sind geometrisch derart dimensioniert, dass sie - stellungsabhängig - feste Wählerkontakte 3 elektrisch beschalten.
Der Abstand zwischen den beiden parallelen beweglichen Wählerkontakten 9, 10 und die Längsausdehnung der festen Wählerkontakte 3 sind derart bemessen, dass sowohl eine Beschaltung zweier benachbarter fester Wählerkontakte (brückende Beschaltung) durch jeweils einen der beweglichen Wählerkontakte 9 oder 10 oder auch ein gemeinsames Aufliegen beider beweglicher Wählerkontakte 9 und 10 auf einem der festen Wählerkontakte 3 möglich ist.
Auf der Tragplatte 1 befinden sich parallel zueinander und parallel sowohl zur Bahn der festen Wählerkontakte 3 als auch parallel zur Gewindespindel 5 längs der dargestellten Strich-Punkt-Linie Kontakt- und Führungsschienen 11 und 12 aus elektrisch leitendem Material, die eine doppelte Funktion besitzen: Zum einen gewährleisten sie die mechanische Führung der längsbeweglichen Wählerkontakteinheit 7. Zum anderen dienen sie zur elektrischen Verbindung von den beweglichen Kontakten 9, 10 des Wählers W des Laststufenschalters hin zu den Schaltelementen des Lastumschalters LU des Laststufenschalters; dies wird weiter unten noch im Detail erläutert.
Am ihrem dem Antriebsmotor 2 abgewandten Ende ist die Gewindespindel 5 mechanisch mit einem Getriebe 13 verbunden, dessen andere Seite eine weitere drehbare Isolierwelle 14 aufweist, die durch zwei weitere Lagerböcke 14.1 und 14.2 drehbar gelagert und in ihrer Position fixiert ist.
Auf der Isolierwelle 14 ist eine Nockenscheibe 15 (oder eine ähnliche, in ihrer Funktionalität vergleichbare Steuereinrichtung) fest angeordnet.

Beidseitig von der Isolierwelle 14 sind die Schaltmittel des Lastumschalters LU, hier zwei Vakuumschaltröhren 16 und 17, angeordnet. Deren Betätigung erfolgt durch jeweils eine Steuerrolle 18 bzw. 19, die auf einer Kontur der Nockenscheibe 15 laufen.
Es ist im Rahmen der Erfindung möglich, dass beide Steuerrollen 18, 19 auf derselben (einzigen) Kontur laufen, beispielsweise auf der Stirnseite; es ist ebenso möglich, für jede der Steuerrollen 18 und 19 eine separate Kontur auf der Nockenscheibe 15 vorzusehen. Die Übertragung der Bewegung der auf der Nockenscheibe 15 ablaufenden Steuerrollen 18, 19 erfolgt durch Umlenkhebel 20, 21 auf jeweils den beweglichen Stößel der Vakuumschaltröhren 16 und 17.
Es ist auch möglich mehr als eine derartige Nockenscheibe vorzusehen. So kann etwa jede Vakuumschaltröhre eine eigene Nockenscheibe zu ihrer Betätigung erhalten.
Es ist im Rahmen der Erfindung auch möglich, statt der Vakuumschaltröhren andere Schaltelemente, beispielsweise mechanische Kontakte, vorzusehen.
Durch das erläuterte Getriebe 13 ist es auf einfache Weise möglich, eine erste spezifische Umdrehungszahl der Gewindespindel 5 für die Betätigung des Wählers W und damit der Wählerkontakte 9, 10 von einer Betriebsstellung zur benachbarten nächsten Betriebsstellung durch Bewegung der Wählerkontakteinheit 7 vorzusehen und weiterhin eine zweite spezifische Umdrehungszahl pro Lastumschaltung für die Nockenscheibe 15 vorzusehen. Es ist im Rahmen der Erfindung auch möglich, feste Wählerkontakte 3, bewegliche Wählerkontakte 9, 10 des Wählers W und Nockenscheibe 15 des Lastumschalters LU derart geometrisch zu dimensionieren, dass ohne Zwischenschaltung eines Getriebes die vom Antriebsmotor 2 gedrehte Gewindespindel 5 die genannten Bauelemente übersetzungslos direkt betätigt.
Die elektrische Verbindung von jeweils einem der (gemeinsam) beweglichen Wählerkontakte 9 oder 10 zu jeweils einer der beiden Kontakt- und Führungsschienen 11 bzw. 12 erfolgt jeweils durch eine elektrische Leitung 22, 23. Die elektrische Verbindung von diesen beiden Kontakt- und Führungsschienen 11 bzw. 12 hin zu den Vakuumschaltröhren 16, 17 erfolgt durch weitere elektrische Leitungen 24, 25. Die elektrische Verbindung schließlich von der anderen Seite der Vakuumschaltröhren 16, 17 hin zur nicht dargestellten Lastableitung übernehmen weitere elektrische Leitungen 26, 27.

Die Wirkungsweise des erfindungsgemäßen Laststufenschalters ist wie folgt:
Es wurde bereits weiter oben dargestellt, dass sowohl das Kontaktieren des gleichen festen Wählerkontaktes 5 durch beide bewegliche Wählerkontakte 9, 10 als auch das brückende Kontaktieren zweier benachbarter fester Wählerkontakte 5 durch jeweils einen der beweglichen Wählerkontakte 9 oder 10 zulässige, stationäre Betriebsstellungen sind.
In dem in Figur 1 gezeigten Ausführungsbeispiel weist der Wähler W sechs feste Wählerkontakte 3 auf; insgesamt ergeben sich damit 11 stationäre Zustände. Mit anderen Worten: 11 verschiedene Spannungen sind einstellbar.
Zu Beginn einer Lastumschaltung wird der Antriebsmotor 2 elektrisch beaufschlagt; die Gewindespindel 5 dreht sich. Damit verschiebt sich, abhängig von der Drehrichtung der Gewindespindel 5, die Wählerkontakteinheit 7 mit Kontaktträger 8 und den beiden beweglichen Wählerkontakten 9, 10 nach oben oder unten, d.h. in Richtung "höher" oder "tiefer" der Spannungsregelung. Diese wechseln bei jeder Umschaltung von einer brückenden in eine nicht brückende Stellung und umgekehrt. Gleichzeitig wird die Isolierwelle 14 und mit ihr die Nockenscheibe 15 gedreht; besonders vorteilhaft - durch das zwischengeschaltete Getriebe 13 - um einen Winkel von 180 oder auch 360 Grad.
In der Folge werden die Steuerrollen 18, 19 ausgelenkt; diese Bewegung wird über die Umlenkhebel 20, 21 zur Betätigung der Vakuumschaltröhren 16, 17 herangezogen. Schaltungsspezifisch kommutiert dabei der Laststrom von der ursprünglichen Position der beweglichen Wählerkontakte 9, 10 auf deren neue Position.
Die Umschaltung ist vollzogen; der Antriebsmotor 2 wird durch geeignete, dem Fachmann geläufige und hier nicht dargestellte Steuer- und/oder Bremsmittel stillgesetzt.

Der erfindungsgemäße Laststufenschalter ist außerordentlich einfach und kompakt aufgebaut und arbeitet ohne Kraftspeicher. Mit nur einer einzigen Drehbewegung eines angesteuerten Elektromotors werden sowohl der Wähler W als auch der Lastumschalter LU betätigt.
Wegen seiner sehr kompakten Bauweise und des außerordentlich geringen Platzbedarfes ist es vorteilhaft möglich, den erfindungsgemäßen Laststufenschalter im Inneren des Stufentransformators in einphasigen Modulen direkt im Bereich der jeweiligen Wicklung, an deren Zwickel, oder an anderen geeigneten Stellen innerhalb des Ölgefäßes des Transformators anzuordnen.
Derartige Anordnungen sind prinzipiell in den DE 20 2010 011 521 U1, DE 20 2010 011 524 U1 und vor allem DE 20 2010 012 811 U1 vorgeschlagen worden. Ihre technische Realisierung scheitere bisher am großen Platzbedarf der bekannten Laststufenschalter mit ihren in der Regel kreisförmigen Stabanordnungen oder Isolierzylindern, die nur schlecht zum geometrischen Profil des verfügbaren Platzes an den Zwickeln passen. Abgesehen vom Profil sind die bekannten Laststufenschalter mit ihren komplexen Kraftspeichern auch von der vertikalen Ausdehnung her nicht für diese bereits vorgeschlagenen Anwendungsfälle geeignet.
Die Erfindung offenbart einen geeigneten Laststufenschalter für derartige innovative Anwendungen.

## Patentansprüche

1. Laststufenschalter zur unterbrechungslosen Umschaltung zwischen verschiedenen Wicklungsanzapfungen eines Stufentransformators, bestehend aus einem Wähler (W) und einem Lastumschalter (LU), wobei
- der Wähler feste Wählerkontakte (3) aufweist, die jeweils mit den einzelnen Wicklungsanzapfungen elektrisch in Verbindung stehen und längs einer linearen Bahn angeordnet sind,
- die festen Wählerkontakte (3) durch zwei längs verschiebbare bewegliche Wählerkontakte (9, 10) des Wählers (W) wahlweise beschaltbar sind,
- zur unterbrechungslosen Umschaltung für jede Phase im Lastumschalter (LU) Schaltmittel (16, 17), insbesondere Vakuumschaltröhren, angeordnet sind,
- ein Motorantrieb mit einem Antriebsmotor (2) zur Einleitung einer Umschaltung des Laststufenschalters angeordnet ist,
**dadurch gekennzeichnet, dass**
- die beiden beweglichen Wählerkontakte (9, 10) und die Schaltmittel (16, 17) mittels des Antriebsmotors (2) direkt betätigbar sind, derart, dass die Einleitung der Antriebbewegung des Antriebsmotors (2) auf die beweglichen Wählerkontakte (9, 10) und die Schaltmittel (16, 17) ohne Zwischenschaltung eines mechanischen Energiespeichers erfolgt,
- eine durch den Antriebsmotor (2) erzeugte Drehbewegung direkt auf eine Gewindespindel (5) übertragbar ist,
- durch die sich drehende Gewindespindel (5) sowohl die beweglichen Wählerkontakte (9, 10) als auch die Schaltmittel (16, 17) betätigbar sind;
- auf der Gewindespindel (5) eine Spindelmutter (6) in Richtung der linearen Bahn verschiebbar geführt ist,
- die Spindelmutter (6) eine Wählerkontakteinheit (7) trägt, auf der die beweglichen Wählerkontakte (9, 10) fest und in ihrem Abstand zueinander fixiert befestigt sind und gemeinsam mit der Wählerkontakteinheit (7) betätigbar sind;
wobei
- der Laststufenschalter auf einer Tragplatte (1) angeordnet ist,
- sich auf der Tragplatte (1) parallel zueinander und parallel sowohl zur Bahn der festen Wählerkontakte (3) als auch parallel zur Gewindespindel (5) längs der Bahn Kontakt- und Führungsschienen (11 und 12) aus elektrisch leitendem Material befinden, die zum einen die mechanische Führung der Wählerkontakteinheit (7) gewährleisten und zum anderen zur elektrischen Verbindung von den beweglichen Kontakten (9, 10) hin zu den Schaltmitteln (16, 17) dienen.

2. Laststufenschalter nach dem vorigen Anspruch, wobei
- der Abstand zwischen den beiden parallelen beweglichen Wählerkontakten (9, 10) und die Längsausdehnung der festen Wählerkontakte (3) derart bemessen sind, dass sowohl eine Beschaltung zweier benachbarter fester Wählerkontakte (brückende Beschaltung) durch jeweils einen der beweglichen Wählerkontakte (9 oder 10) oder auch ein gemeinsames Aufliegen beider beweglicher Wählerkontakte (9 und 10) auf einem der festen Wählerkontakte (3) möglich ist.

3. Lastumschalter nach Anspruch 1, wobei
- die Schaltmittel Vakuumschaltröhren (16, 17) sind,
- deren Betätigung durch Steuerrollen (18, 19) erfolgt, die mit mindestens einer Kontur mindestens einer Nockenscheibe (15) korrespondieren,
- die mindestens eine Nockenscheibe (15) mit der Gewindespindel (5) mechanisch in Verbindung steht.

4. Laststufenschalter nach dem vorigen Anspruch, wobei
- die mindestens eine Nockenscheibe (15) mit der Gewindespindel (5) über ein zwischengeschaltetes Getriebe (13) mechanisch in Verbindung steht.

5. Laststufenschalter nach einem der vorigen Ansprüche, wobei
- die elektrische Verbindung von jeweils einem der gemeinsam beweglichen Wählerkontakte (9 oder 10) zu jeweils einer der beiden Kontakt- und Führungsschienen (11 bzw. 12) jeweils durch eine elektrische Leitung (22, 23) erfolgt,
- die elektrische Verbindung von diesen beiden Kontakt- und Führungsschienen (11 bzw. 12) hin zu den Vakuumschaltröhren (16, 17) durch weitere elektrische Leitungen (24, 25) erfolgt,
- die elektrische Verbindung schließlich von der anderen Seite der Vakuumschaltröhren (16, 17) hin zu einer Lastableitung durch noch weitere elektrische Leitungen (26, 27) erfolgt.

6. Laststufenschalter nach einem der vorigen Ansprüche, wobei
- der Laststufenschalter im Inneren des Stufentransformators in einphasigen Modulen direkt im Bereich der jeweiligen Wicklung, an deren Zwickel, oder an anderen geeigneten Stellen innerhalb des Ölgefäßes eines Transformators angeordnet ist.

## Claims

1. On-load tap changer for uninterrupted switching over between different winding taps of a tapped transformer, consisting of a selector (W) and a load changeover switch (LU), wherein
- the selector has fixed selector contacts (3), which are respectively electrically connected with the individual winding taps and which are arranged along a linear path,
- the fixed selector contacts (3) are selectably connectible by two longitudinally displaceable, movable selector contacts (9, 10) of the selector (W),
- switching elements (16, 17), particularly vacuum interrupters, are arranged in the load changeover switch (LU) for uninterrupted switching over for each phase,
- a motor drive with a drive motor (2) is arranged for initiation of a switching over process of the on-load tap changer,
**characterised in that**
- the two movable selector contacts (9, 10) and the switching means (16, 17) are so directly actuable by means of the drive motor (2) that the initiation of the drive movement of the drive motor (2) at the movable selector contacts (9, 10) and the switching means (16, 17) takes place without interposition of a mechanical energy store,
- a rotational movement produced by the drive motor (2) of the motor drive is directly transmissible to a threaded spindle (5),
- not only the movable selector contacts (9, 10), but also the switching means (16, 17) are actuable by the rotating threaded spindle (5),
- a spindle nut (6) is guided on the threaded spindle (5) to be displaceable in the direction of the linear path,
- the spindle nut (6) carries a selector contact unit (7), on which the movable selector contacts (9, 10) are fastened firmly and fixed in their spacing from one another and are actuable in common with the selector contact unit (7);
wherein
- the on-load tap changer is arranged on a support plate (1),
- contact and guide rails (11 and 12) of electrically conductive material are disposed on the support plate (1) parallel to one another and not only parallel to the path of the fixed selector contacts (3), but also parallel to the threaded spindle (5) longitudinally of the path, which rails on the one hand ensure mechanical guidance of the selector contact unit (7) and on the other hand serve for electrical connection of the movable contacts (9, 10) with respect to the switching elements (16, 17).

2. On-load tap changer according to the preceding claim, wherein
- the spacing between the two parallel movable selector contacts (9, 10) and the length of the fixed selector contacts (3) are so dimensioned that not only a connection of two adjacent fixed selector contacts (bridging connection) by a respective one of the movable selector contacts (9 and 10), but also a resting in common of two movable selector contacts (9 and 10) on one of the fixed selector contacts (3) are possible.

3. On-load tap changer according to claim 1, wherein
- the switching elements are vacuum interrupters (16, 17),
- the actuation thereof is effected by cam rollers (18, 19), which co-operate with at least one contour of at least one cam disc (15), and
- the at least one cam disc (15) is mechanically connected with the threaded spindle (5).

4. On-load tap changer according to the preceding claim, wherein
- the at least one cam disc (15) is mechanically connected with the threaded spindle (5) by way of an intermediate transmission (13).

5. On-load tap changer according to any one of the preceding claims, wherein
- the electrical connection of each one of the selector contacts (9 or 10), which are movable in common, with a respective one of the two contact and guide rails (11 and 12) is effected by a respective electrical line (22, 23),
- the electrical connection of these two contact and guide rails (11 or 12) with respect to the vacuum interrupters (16, 17) is effected by further electrical lines (24, 25), and
- finally the electrical connection of the other side of the vacuum interrupters (16, 17) with respect to a load diverter is effected by yet further electrical lines (26, 27).

6. On-load tap changer according to any one of the preceding claims, wherein
- the on-load tap changer is arranged in the interior of the tapped transformer in single-phase modules directly in the region of the respective winding, at the core thereof or at other suitable places within the oil vessel of a transformer.

## Revendications

1. Changeur de prises en charge pour commuter sans coupure entre différentes prises d'enroulement d'un transformateur de réglage, composé d'un sélecteur (W) et d'un commutateur de charge (LU),
- le sélecteur comporte des contacts de sélection fixes (3) reliés électriquement à chacune des prises d'enroulement et installés le long d'un trajet linéaire,
- les contacts de sélecteur (3), fixes peuvent être commutés sélectivement par deux contacts (9, 10) du sélecteur (W) qui sont mobiles par coulissement longitudinal,
- les moyens de commutation (16, 17), notamment des tubes de commutations sous vide sont prévus pour commuter sans coupure, chaque phase dans le commutateur de charge (LU),
- un entraînement avec un moteur (2) assure la commutation du changeur de prises en charge,
changeur de prises en charge **caractérisé en ce que**
les deux contacts de sélecteur mobile (9, 10) et les moyens de commutation (16, 17) sont actionnés directement par le moteur (2) pour que l'amorce du mouvement d'entraînement du moteur (2) sur les contacts de sélecteurs (9, 10) mobiles et les moyens de commutation (16, 17) se fasse sans l'interposition d'un accumulateur d'énergie mécanique,
- le mouvement de rotation généré par le moteur (2) est transmis directement à une broche filetée (5),
- la broche filetée (5) en rotation, actionne à la fois les contacts de sélecteur, mobiles (9, 10) et les moyens de commutation (16, 17),
- la broche filetée (5) a un écrou (6) coulissant dans la direction de la trajectoire linéaire,
- l'écrou (6) de la broche porte une unité de contacts de sélecteur (7), contacts sur lesquels sont fixés solidairement les contacts de sélecteur (9, 10) mobiles et leur écartement est bloqué, ces contacts étant actionnés en commun par l'unité de contact de sélecteur (7),
dans lequel
- le changeur de prises en charge est installé sur une plaque de support (1),
- le long de la trajectoire, la plaque de support (1) a parallèlement entre eux et parallèlement à la fois à la trajectoire des contacts de sélecteur fixe (3) et aussi parallèlement à la broche filetée (5), des rails de contact et de guidage (11 et 12) en une matière électro-conductrice, qui, d'une part assurent le guidage mécanique de l'unité de contacts de sélecteur (7) et d'autre part réalisent le branchement électrique entre les contacts mobiles (9, 10) et les moyens de commutation (16, 17).

2. Changeur de prises en charge selon la revendication précédente, dans lequel
- la distance entre les deux contacts de sélecteur (9, 10) mobiles parallèlement et l'extension longitudinale du contact de sélecteur (3), fixe est dimensionnée de façon à permettre le branchement de deux contacts de sélecteur, fixes, voisins (branchement en pont) à la fois par l'un des contacts de sélecteur mobiles (9 ou 10) et également par la venue en appui commun des deux contacts de sélecteur mobiles (9 et 10) sur un contact de sélecteur fixe (3).

3. Changeur de prises en charge selon la revendication 1,
**caractérisé en ce que**
les moyens de commutation sont des tubes de commutation sous vide (16, 17),
- leur actionnement est fait par des galets de commande (18, 19) qui correspondent au moins au contour d'au moins une came (15), et
- la came (15) est reliée mécaniquement à la broche filetée (5).

4. Changeur de prises en charge selon l'une des revendications précédentes, dans lequel
- la came (15) est reliée mécaniquement à la broche filetée (5) par une transmission intermédiaire (13).

5. Changeur de prises en charge selon la revendication précédente, **caractérisé en ce que**
- la liaison électrique entre respectivement l'un des contacts de sélecteur mobiles (9 ou 10) vers chacun des deux rails de contact ou de guidage (11 ou 12) se fait par une ligne électrique (22, 23) respective,
- la liaison électrique des deux rails de contact et de guidage (11 et 12) vers les tubes de communication sous vide (16, 17) se fait par d'autres lignes électriques (24, 25), et
- le branchement électrique se fait finalement à partir de l'autre côté des tubes de commutation sous vide (16, 17) vers la ligne de charge à travers d'autres lignes électriques (26, 27).

6. Changeur de prises en charge selon l'une des revendications précédentes, dans lequel
- le changeur de prises en charge est installé à l'intérieur du transformateur à prises dans un module propre, directement dans la zone de l'enroulement respectif, sur son enroulement ou sur d'autres points appropriés dans la cuve à huile du transformateur.
